(19) Europäisches Patentamt
European Patent Office
Office européen des brevets

(11) Publication number: **0 037 450**
**B1**

(12) **EUROPEAN PATENT SPECIFICATION**

(45) Date of publication of patent specification: **12.09.84**

(51) Int. Cl.$^3$: **B 01 D 53/34**

(21) Application number: **80400459.6**

(22) Date of filing: **04.04.80**

# (54) Process for the removal of acid and acid precursor gases and vapors from gas streams.

(43) Date of publication of application:
**14.10.81 Bulletin 81/41**

(45) Publication of the grant of the patent:
**12.09.84 Bulletin 84/37**

(84) Designated Contracting States:
**AT BE CH DE FR GB IT LI LU NL SE**

(56) References cited:
**DE-A-2 231 029**
**DE-A-2 511 976**
**DE-B-1 262 233**
**FR-A-2 378 556**
**GB-A-1 493 172**
**US-A-4 113 840**

(73) Proprietor: **CALGON CORPORATION**
**Route 60-Campbell's Run Road**
**Robinson Township Pennsylvania 15205 (US)**

(72) Inventor: **Sinha, Rabindra Kumar**
**C-286, Road No. 1**
**Ashok Nagar, Ranchi-2-(Bihar) (IN)**
Inventor: **Polinsky, Charles K.**
**2201 Saranac Avenue**
**Pittsburgh, Pennsylvania 15216 (US)**
Inventor: **Cifrulak, S. David**
**114 William Penn Circle**
**Sewickley, Pennsylvania, 15143 (US)**
Inventor: **Wagner, Norman J.**
**1430 Morrow Road**
**Pittsburgh, Pennsylvania 15241 (US)**

(74) Representative: **Corre, Jacques Denis Paul et al**
**Cabinet Regimbeau 26, Avenue Kléber**
**F-75116 Paris (FR)**

**EP 0 037 450 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is concerned with a method for the removal of chlorine gas and vapor from the gases, by passing the polluted gas through a bed of activated carbon impregnated with caustic.

An impregnated activated carbon suitable for use in the novel method of this invention is an activated carbon impregnated with 0.5 to 20% by weight of moisture, both based on weight of dry activated carbon. Carbons of this type are fully described in US-A-4,072,479, the disclosure of which is incorporated herein by reference.

This prior document discloses a process for the removal of malodorous compounds, especially sulfur-containing compounds, from gas streams containing oxygen, by contacting the gas streams with the said impregnated activated carbon in a one bed system.

The novel method of this invention has several applications such as providing noncorrosive make-up air for electronic equipment in control rooms, particularly in water treatment plants where the air may have up to a few parts per million of chlorine, and in industrial chemical plants which can provide chlorine gas and vapor contaminant gas. Another application is treatment of flue gases for removal of chlorine therefrom.

Traditionally, such gas purification needs have been supplied by various methods, such as scrubbing, adsorption or absorption. Now with the present invention there is provided a novel method combining all of the advantages associated with adsorption with enhanced capacities over conventional adsorbents combined with some of the advantages of a scrubbing system.

### Summary of the Invention

In accordance with the present invention, the caustic impregnated activated carbon is employed for removal of chlorine from gas streams.

More specifically, the process of this invention comprises contacting the gas stream with a first bed of activated carbon in the presence of water, to convert the chlorine contaminant to acidic contaminants, and with a second bed of activated carbon, said second bed of activated carbon impregnated with 0.5% to 20% by weight of sodium hydroxide and 4% to 50% by weight of moisture to adsorb the acidic contaminants.

When the activated carbon has become spent, or loaded, as a result of adsorption of the acid reacting substances, it is then regenerated with caustic in the manner described in US—A—4,072,479 previously cited.

The concentration of chlorine in the gas stream is not critical and concentrations resulting in as low an amount as $1.0 \times 10^{-6}$ mole of the materials passing through the activated carbon per minute can be removed. The relative effectiveness of caustic impregnated activated carbons in removing the chlorine and gas and vapor is measured by contacting gas streams with known contaminants with the caustic impregnated activated carbon for known periods of time from which can be determined the loading of the carbon as a weight percent of dry activated carbon.

The amount of chlorine gas of vapor adsorbed by any particular activated carbon will be a function of at least the following factors; the degree of attraction of the impregnated activated carbon for the particular acid reacting compound; the pore structure of the impregnated activated carbon, particularly with respect to size; the specific surface area of the impregnated activated carbon; the relative humidity of the gas stream; and the surface characteristics of the impregnated activated carbon. It is preferred to employ an activated carbon with a large proportion of its pores having diameters below 80A. It is particularly important to employ impregnated activated carbons having high surface areas. Granular activated carbon is preferred to powder, and the size range of the granules is largely a matter of choice, although granules falling between Nos. 4 and 10 of the U.S. Sieve Series are preferred. Thus, it is preferred to use IVP granular activated carbon manufactured by the activated carbon division of Calgon Corporation, Pittsburgh, Pennsylvania.

The presence of water vapor during the adsorption of the acid reacting materials increases the efficiency permitting heavier loading of the impregnated activated carbon. For example, 80% relative humidity increases the loading capacity by a factor of 3—4 times over that obtainable at 0% relative humidity.

The removal of chlorine by activated carbon is a chemisorption rather than a simple adsorption and may be represented as follows:

$$Cl_2 + H_2O \xrightarrow{A/C} HOCl + H^{\oplus}Cl^{\ominus}$$

$$HOCl + A/C \xrightarrow{slow} C(O) + H^{\oplus}Cl^{\ominus}$$

wherein A/C represents activated carbon and the C (O) is bound to the carbon surface.

Employing the caustic impregnated activated carbon in the novel method of this invention there is provided the additional chemical reactions represented as:

$$NaOH + HCl \longrightarrow NaCl + H_2O$$

$$NaOH + HOCl \longrightarrow NaOCl + H_2O$$

which serves to aid in the removal of any acidic materials that were originally present in the environment, or produced by reactions of halogens with the activated carbon. Accordingly, in this application, wherein the principle contaminant to be removed is chlorine it is appropriate to use a series of at least two beds of activated carbon in tandem, wherein the activated carbon of the first bed on the upstream side is not impregnated with caustic but is otherwise of the same type, such as BPL granular activated carbon, also manufactured by Calgon Corporation and one or more of the downstream beds comprises the caustic impregnated activated carbon. With this system, the halogen gas contaminant is converted to acidic contaminants by the first bed of activated carbon, which are subsequently adsorbed on the caustic impregnated activated carbon in accordance with the novel method of this invention.

The following experiments will serve to better illustrate this novel method relating to the conversion on the first bed.

The apparatus comprises (a) a compressed gas cylinder fitted with appropriate outlet control valves containing nitrogen with 520 parts per million of chlorine connected to (b) a small mixing chamber, with an inlet port for introducing metered amounts of other components such as water vapor, connected to (c) a tube or cylinder (1.84 cm. diameter by 15.25 cm. length) for holding the activated carbon fitted with a gas inlet and outlet for downward flow, connected to (d) a flow meter, the outlet tube from which is fitted with outlet sample ports for measuring such factors as humidity and the presence of other constituents in the gas stream.

Experiment 1 — BPL-Carbon, 80% RH Exit

A gas stream consisting of nitrogen containing 520 ppm of chlorine was passed through 10 g of BPL carbon previously equilibrated with 80% relative humidity air, at a flow rate of 1.2 liters/minute which corresponds to a contact time of 1 second. Water was added to the inlet stream at the rate of 1.5 ml/hour to produce a relative humidity of 80%. Gas flow was terminated after 790 minutes with no sign of chlorine breakthrough. The amount of chlorine adsorbed by 10.0 g of carbon corresponds to a weight percent loading of 15.6. Other experiments following substantially the procedure of Experiment 1 were conducted with the conditions and results depicted in Table I.

TABLE I

| Experiment | Carbon | RH Inlet | RH(2) Carbon Moisture | RH Exit | Gas Flow Time (Min.) | Wt. % Loading | |
|---|---|---|---|---|---|---|---|
| | | | | | | $Cl_2$ | $Cl^-$ |
| 2 | BPL | 80.0% | 2.0% | – | 315 | 6.21 | 0.00 |
| 3 | BPL | 0.0% | 2.0% | – | 395 | 7.80 | 0.00 |
| 4 | IVP | 0.0% | 4.2% | – | 134 | 2.63 | 2.63 |
| 5 | IVP | 80.0% | 4.2% | 68%(1) | 480 | 9.50 | 9.50 |

NOTE: Wt. % loading is not a measure of maximum loading but rather represents the amount of chlorine and chloride adsorbed during the arbitrary time of gas flow. Breakthrough of chlorine occurred only in Experiment 4 at 134 minutes. After 450 minutes, the effluent concentration of chloride was 26% of influent concentration.

(1) during middle of the run.

(2) In Experiments 2–5, the activated carbon was "dry" and not pretreated with water vapor as described in Experiment 1.

## Claim

A process for the removal of chlorine from gas streams which comprises contacting the gas stream with a first bed of activated carbon in the presence of water, to convert the chlorine contaminant to acidic contaminants, and with a second bed of activated carbon, said second bed of activated carbon impregnated with 0.5 to 20% by weight of sodium hydroxide and 4% to 50% by weight of moisture, to adsorb the acidic contaminants.

**Patentanspruch**

Verfahren zur Entfernung von Chlor aus Gasströmen, wobei der Gasstrom mit einem ersten Bett von Aktivkohle in Anwesenheit von Wasser kontaktiert wird, um die Chlorverunreinigung in saure Verunreinigungen zu überführen, und dann mit einem zweiten Bett von Aktivkohle, welches mit 0,5 bis 20 Gew.% Natriumhydroxid und 4 bis 50 Gew.% Feuchtigkeit imprägniert ist, um die sauren Verunreinigungen zu adsorbieren.

**Revendication**

Procédé d'élimination du chlore des courants gazeux, qui comprend la mise en contact du courant gazeux avec un premier lit de charbon activé en présence d'eau, pour transformer l'impureté chlore en impuretés acides, et avec un second lit de charbon activé imprégné à l'aide de 0,5 à 20% en poids d'hydroxyde de sodium et de 4% à 50% en poids d'humidité, pour adsorber les impuretés acides.